# FASCICULE DE BREVET EUROPEEN

(11) **EP 0 797 281 B1**
(45) Date de publication et mention de la délivrance du brevet: **07.11.2001**
(21) Numéro de dépôt: 97400586.0
(22) Date de dépôt: 17.03.1997
(51) Int. Cl.: H02G 15/18, H02G 1/14

(54) **Procédé et ensemble de dépose à serrage d'un revêtement tubulaire élastique sur un élément**
Verfahren und Vorrichtung zum Aufbringen einer elastischen rohrförmigen Umhüllung unter Klemmwirkung auf ein Element
Process and assembly for mounting tightly a resilient tubular covering on an element

(30) Priorité: 21.03.1996 FR 9603518
(43) Date de publication de la demande: 24.09.1997
(73) Titulaire: NEXANS France, 75008 Paris (FR)
(72) Inventeur: Cardinaels, Jozef, 9230 Wetteren (BE)
(74) Mandataire: Feray, Valérie

(56) Documents cités:
- EP-A- 0 631 357
- FR-A- 2 592 825
- FR-A- 2 724 444

## Description

La présente invention porte sur un procédé et un ensemble de dépose à serrage d'un revêtement élastique sur un élément. Elle s'applique particulièrement mais non exclusivement aux jonctions et aux terminaisons de câbles électriques d'énergie, dans lesquelles le revêtement est un manchon extérieur de protection et d'étanchéité, ou un manchon intérieur de reconstitution fonctionnelle de la portion terminale préalablement dénudée de chaque câble et de protection contre des contraintes électriques, ou un tel manchon intérieur et un tel manchon extérieur alors déposés simultanément en place.

Le document FR-A-2 592 825 décrit un ensemble de dépose à serrage d'un tel revêtement sur un élément, tel qu'un câble ou deux câbles raccordés électriquement et mécaniquement l'un à l'autre. Cet ensemble comporte un support tubulaire rigide, qui est de dimensions prévues pour son libre montage sur l'élément et est muni d'un film souple à faible coefficient de frottement. Ce film est fixé à une extrémité du support et s'étend librement sur sa surface extérieure. Le revêtement est monté en expansion sur l'ensemble de dépose, pour être positionné au dessus de l'élément. Il est déposé et simultanément rétracté en place sur l'élément en dégageant l'ensemble de dépose du dessous du revêtement, tout en maintenant manuellement le revêtement en position au dessus de l'élément. Au fur et à mesure du dégagement du support rigide, le film se retourne sous le revêtement rétracté en place. Il est à son tour dégagé du dessous du revêtement totalement rétracté en place.

Le document FR-A-2 706 979 divulgue un ensemble de dépose du type précité mais dans lequel le film souple à faible coefficient de frottement n'est pas fixé à l'extrémité du support et est alors associé à un moyen de guidage et d'entraînement autour de cette extrémité et le long de la surface intérieure du support, au fur et à mesure du dégagement de ce support du dessous du revêtement expansé qu'il porte.

Le problème posé par de tels ensembles de dépose, ou tout autre ensemble de dépose dégageable du dessous du revêtement en expansion sur lui, est que le revêtement ne se dépose pas toujours rigoureusement sur l'emplacement souhaité de l'élément, mais bouge plus ou moins avec l'ensemble de dépose sur lequel il est nécessaire de tirer fortement pour son dégagement.

Pour éviter un tel problème, le document FR-A-2 724 444 prévoit d'adopter en particulier un ensemble de dépose tel que ceux précités mais dont le support rigide est en deux parties tubulaires indépendantes l'une de l'autre, qui sont mises bout à bout pour recevoir le revêtement expansé sur elles deux et sont dégagées l'une après l'autre du dessous de revêtement, et prévoit alors des moyens pour fixer la dernière des deux parties devant être dégagée du dessous du revêtement à l'élément, pendant le dégagement de la première partie.

Ces dispositions prévues sont globalement satisfaisantes, mais imposent cependant un espace suffisant dans les deux directions le long de l'élément, de part et d'autre de l'ensemble de dépose du revêtement sur l'élément, pour dégager l'une puis l'autre de ses deux parties. Elles imposent alors un support en deux parties alors qu'il est avantageux d'utiliser si possible un ensemble de dépose dont le support est d'une seule pièce, en particulier pour des raisons de temps global des opérations et de coût global résultant. Mais il est parfois impossible d'avoir un espace suffisant dans l'une ou l'autre des deux directions et donc d'utiliser de telles dispositions et il est de toute manière avantageux de n'avoir à prévoir qu'un seul espace dans l'une ou l'autre des deux directions pour dégager l'ensemble de dépose. Ces différentes considérations font que, dès que possible, cet ensemble de dépose est de préférence choisi d'une seule pièce et ne peut alors donc pas être fixé à l'élément.

La présente invention a pour but d'éviter un positionnement incorrect d'un tel revêtement sur un élément, au cours du dégagement d'un ensemble de dépose sur lequel il est initialement expansé, que cet ensemble de dépose soit en particulier et avantageusement d'une seule partie alors dégagée au fur et à mesure dans une seule direction le long de l'élément, ou soit éventuellement en deux parties alors dégagées tour à tour dans des directions opposées le long de l'élément.

Elle a pour objet un procédé de dépose avec serrage d'un revêtement tubulaire élastique sur un élément, consistant à utiliser un support tubulaire rigide sur lequel ledit revêtement est préalablement expansé, à positionner le revêtement expansé porté par ledit support autour dudit élément et à dégager au moins partiellement ledit support du dessous dudit revêtement expansé, en tirant sur ce support depuis une première de ses extrémités, ledit support ayant des dimensions prévues pour son libre montage sur ledit élément, caractérisé en ce qu'il consiste à assurer une solidarisation matérielle temporaire entre ledit revêtement expansé sur ledit support et ainsi positionné sur ledit élément et une zone de l'élément située au-delà de la deuxième extrémité opposée à la première dudit support, avant de dégager ce support du dessous du revêtement, pour le maintien positionné dudit revêtement pendant le dégagement du support.

Elle a également pour objet un ensemble de dépose avec serrage d'un revêtement tubulaire élastique sur un élément, comportant un support tubulaire rigide, de dimensions prévues pour son libre montage sur l'élément, et le revêtement monté expansé sur ledit support, pour sa dépose en place sur l'élément par dégagement au moins partiel dudit support du dessous de ce revêtement en tirant sur le support depuis une première de ses extrémités, caractérisé en ce qu'il comporte en outre des moyens auxiliaires associés, souples, résistants en traction et non élastiques, de solidarisation mécanique temporaire dudit revêtement porté par ledit support audit élément sur lequel ledit support est monté, avec ledit revêtement expansé sur lui.

Ces moyens auxiliaires de solidarisation sont en particulier des bandes ou un manchon auxiliaire, dont l'une des portions terminales est bloquée en translation sur, sous ou contre le revêtement expansé et l'autre portion terminale est saillante au-delà de la deuxième extrémité du support pour être fixée sur l'élément.

Ces moyens auxiliaires présentent avantageusement une série de trous le long de leur portion saillante, d'indexation de la position du manchon expansé.

Les caractéristiques et avantages de la présente invention ressortiront de la description faite ci-après d'exemples de réalisation donnés dans les dessins annexés, dans lesquels :
- la figure 1 représente un ensemble de dépose d'un revêtement expansé, selon l'invention.
- la figure 2 représente ce même ensemble au cours de la dépose du revêtement sur deux câbles raccordés.
- les figures 3 et 4 représentent des variantes données par rapport à la figure 1.

Dans ces figures, on a désigné par 1 un support rigide tubulaire, qui dans les réalisations illustrées est un tube recouvert d'un film souple 2 de faible coefficient de frottement. Ce film est totalement libre sur le tube. Il s'étend initialement sur une partie de la longueur de la surface extérieure du tube, sensiblement depuis une première extrémité 1A de celui-ci. Il est associé à des moyens de guidage et d'entraînement 3 autour de cette extrémité 1A et le long de la surface intérieure du tube.

Ces moyens 3 sont en particulier un jeu de courroies souples et résistantes, ayant un faible coefficient de frottement, qui sont fermées sur elles-mêmes en s'étendant par dessus le film et par ailleurs le long des surfaces intérieure et extérieure du tube ou en variante en étant couplées aux deux extrémités du film et s'étendant par ailleurs sur la surface extérieure du tube et le long de sa surface intérieure. L'extrémité 1A et la deuxième extrémité 1B du tube sont arrondies pour éviter les déchirures du film et/ou des courroies.

Des moyens de préhension 4 sont prévus sur l'extrémité 1B du tube, pour tirer plus facilement sur le tube. Ce sont en particulier des épaulements saillants et segmentés prévus entre les courroies sur la périphérie de la partie terminale, à cette extrémité 1B du tube.

Ce support tubulaire rigide, ou tube ainsi équipé, constitue un ensemble de dépose d'un manchon élastique 5 monté en expansion sur celui-ci, par dégagement en force du support du dessous du manchon en tirant sur ce support.

En variante, ce support peut être constitué par un support spiralé alors dégagé du dessous du manchon expansé, en défaisant, par l'intérieur du support depuis l'une de ses extrémités, la spire terminale de l'extrémité opposée et les spires suivantes.

Pour la dépose du manchon expansé porté par ce support sur un élément devant le recevoir, on prévoit selon l'invention des moyens auxiliaires 6 associés et fixés au manchon pour sa solidarisation à cet élément. Ces moyens 6 sont en particulier des bandes souples, résistantes à la traction mais pas élastiques, pouvant être en plastique renforcé ou non, en métal, ou en métal et plastique.

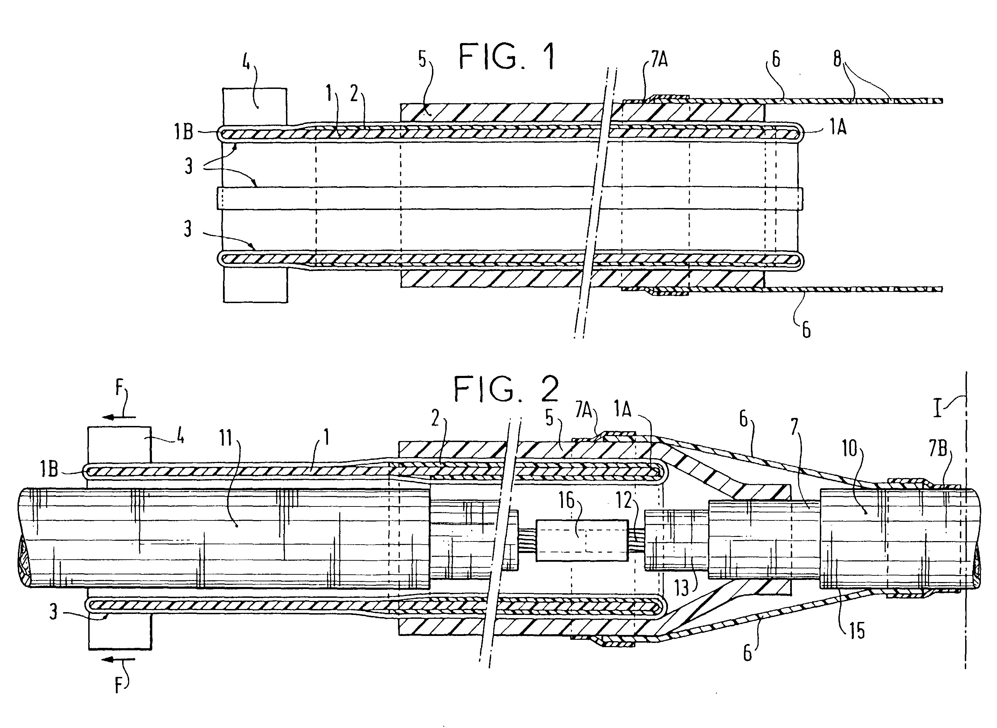

Dans la figure 1, ces bandes de solidarisation 6 sont fixées sur la périphérie du manchon expansé, par un ruban adhésif 7A enroulé autour de leur partie terminale située sur ce manchon et autour du manchon. Elles sont largement saillantes au-delà de l'extrémité 1A du support 1 et de l'extrémité correspondante du manchon.

Les bandes ont avantageusement une série de trous 8 réguliers et à faible pas le long de leur partie saillante, pour une indexation de la position du manchon par rapport à chacun d'eux et pour le cas échéant un positionnement précis du manchon, porté par son support, au-dessus de l'élément devant le recevoir. Ceci est par exemple le cas pour le positionnement de ce manchon porté par son support sur un câble muni d'une cosse terminale par rapport à laquelle le manchon à déposer sur le câble doit être positionné. On utilise dans ce cas l'un des trous convenables, pour fixer à l'aide d'une goupille ou autre la bande à la cosse et on dégage le support le long du câble et non pas par dessus la cosse.

La figure 2 est donnée en correspondance avec la figure 1 et illustre la dépose du manchon 5 sur les parties terminales de deux câbles électriques 10 et 11 raccordés l'un à l'autre, ces deux câbles raccordés constituant l'élément devant recevoir ce manchon.

Chacun des câbles comporte un conducteur central 12, une isolation 13 sur ce conducteur, un blindage 14 sur l'isolation et une gaine extérieure 15 et a sa partie terminale dénudée en dégradé, ainsi que visible sur le câble 10. Un raccord 16 relie électriquement les conducteurs dénudés et relie mécaniquement les deux câbles.

Le manchon 5 expansé sur son support rigide 1 est initialement sur l'un des câbles, dans ce cas le câble 11, et est ensuite positionné sur les deux câbles raccordés, pour sa dépose sur le raccord en s'étendant de part et d'autre sur le blindage de chaque câble. Il est solidarisé mécaniquement au câble 10 par les bandes 6 déjà fixées sur lui, qui sont tendues et ainsi fixées au câble 10. Un ruban adhésif 7B assure la fixation des bandes sur la gaine 15 du câble 10, ces bandes étant coupées si elles sont trop longues. Le support 1 est dégagé en force en le tirant selon la flèche F le long du câble 11, tandis qu'au fur et à mesure le manchon se dépose rigoureusement à l'emplacement souhaité au-dessus duquel il a été positionné et retenu mécaniquement, pour éviter tout déplacement avec le dégagement du support.

Les bandes 6 sont ensuite désolidarisées du manchon 5 rétracté en place.

On a en outre schématisé par une ligne I, perpendiculaire au câble 10 et relativement proche de sa partie terminale dénudée, une limite au-delà de laquelle l'accès autour du câble n'a pas été réalisé, soit que l'accès n'était pas nécessaire ou pas réalisable au-delà de cette limite. Cette limite I rend obligatoire d'effectuer le dégagement du support de dépose le long de l'autre câble, ce support étant alors d'une seule pièce.

Bien entendu si la limite d'accès autour du câble 10 est suffisamment éloignée de la partie terminale dénudée de ce câble, le support de dépose du manchon peut être en deux parties, qui sont alors bout à bout sous le manchon expansé. Dans ces conditions, l'une des parties est dégagée le long du câble sur lequel elle s'étend, après avoir solidarisé selon l'invention le manchon expansé à l'autre câble. L'autre partie est dégagée le long de l'autre câble après avoir désolidarisé le manchon de cet autre câble.

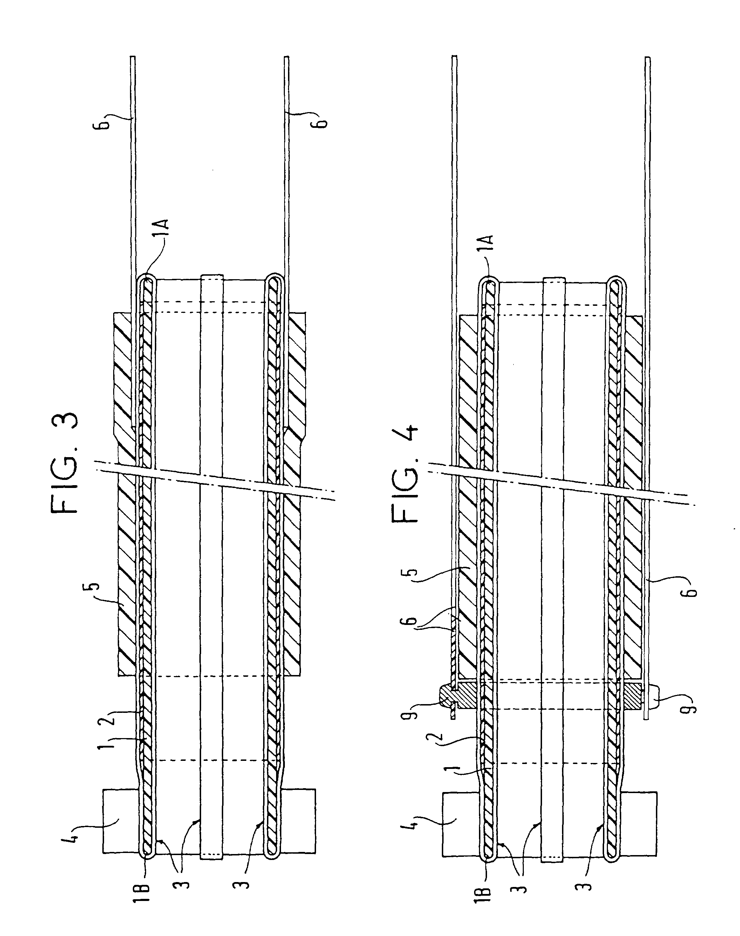

En variante par rapport à la figure 1, ainsi que montré dans la figure 3, les bandes de solidarisation 6 précitées sont fixées au manchon en enserrant l'une de leurs portions terminales entre le manchon expansé 5 et le support de dépose 1 qui le porte, pour leur fixation résultante directe au manchon expansé par la force de compression exercée par ce manchon expansé. Ces bandes sont ainsi fixées au manchon lors du montage en expansion de ce manchon sur son support de dépose. Elles demeurent ainsi fixées au manchon, tant que le support de dépose n'est pas dégagée du dessous du manchon sur la longueur des portions terminales des bandes enserrées entre eux. A la fin de l'opération de dépose du manchon, ces mêmes portions terminales des bandes sont toujours sous le manchon et sont à leur tour dégagées manuellement du dessous du manchon.

Dans la figure 4, les bandes de solidarisation 6 sont prévues plus longues que dans les figures 1 à 3, pour être comme précédemment très largement saillantes sur l'extrémité 1A du support 1 et l'extrémité correspondante du manchon 5 expansé sur ce support. Elles sont par ailleurs légèrement saillantes sur l'autre extrémité du manchon. Elles lui sont fixées par une bague ou analogue de couplage 9, qui est équipée pour recevoir et retenir les premières portions terminales des bandes 6 et qui repose sur la périphérie du support en étant mise en butée contre l'extrémité du manchon située du côté de l'extrémité 1B de ce support. Ainsi pour l'opération de dépose du manchon en place, ces bandes sont tendues le long du manchon et fixées à l'élément devant le recevoir. Lors du dégagement du support, la tension exercée sur les bandes s'oppose à tout déplacement longitudinal du manchon par rapport à l'élément sur lequel il se rétracte.

En variante non représentée et indiquée par rapport à cette figure 4, la bague de retenue peut être fixée par collage ou autre sur la périphérie du manchon ou être directement solidaire du manchon si celui-ci est moulé.

On indique également que la bague n'est pas nécessairement continue sur la périphérie du manchon.

En variante par rapport aux figures 1 à 4, les moyens de solidarisation peuvent être un manchon auxiliaire de solidarisation qui est utilisé en lieu et place des bandes et présente les mêmes caractéristiques mécaniques que ces bandes.

En variante aussi par rapport aux figures 1 et 4, les bandes ou le manchon auxiliaire de solidarisation peuvent être fixés au manchon par collage, ou autre.

On précise en outre que les moyens de solidarisation peuvent être fixés au manchon expansé, en usine, de sorte que le manchon expansé sur l'ensemble de dépose soit initialement muni de ses moyens de solidarisation à l'élément devant le recevoir ou peuvent être fixés au manchon sur le site de dépose.

On précise par ailleurs que le revêtement expansé sur son support peut être un manchon unique, monocouche ou multicouche ou être constitué par deux manchons superposés alors à déposer simultanément.

## Revendications

1. Procédé de dépose avec serrage d'un revêtement tubulaire élastique sur un élément, consistant à utiliser un support tubulaire rigide (1) sur lequel ledit revêtement (5) est préalablement expansé à positionner le revêtement (5) expansé porté par ledit support (1) autour dudit élément et à dégager au moins partiellement ledit support (1) du dessous dudit revêtement (5) expansé, en tirant sur ce support (1) depuis une première de ses extrémités (1A), ledit support (1) ayant des dimensions prévues pour son libre montage sur ledit élément, **caractérisé en ce qu'**il consiste à assurer une solidarisation matérielle temporaire entre ledit revêtement (5) expansé sur ledit support (1) et ainsi positionné sur ledit élément et une zone de l'élément située au-delà de la deuxième extrémité (1B) opposée à la première (1A) dudit support (1), avant de dégager ce support (1) du dessous du revêtement (5), pour le maintien positionné dudit revêtement (5) pendant le dégagement du support (1).

2. Ensemble de dépose avec serrage d'un revêtement tubulaire élastique sur un élément, comportant un support tubulaire rigide (1), de dimensions prévues pour son libre montage sur l'élément, et le revêtement (5) monté expansé sur ledit support, pour sa dépose en place sur l'élément par dégagement au moins partiel dudit support du dessous de ce revêtement en tirant sur le support depuis une première de ses extrémités, **caractérisé en ce qu'**il comporte en outre des moyens auxiliaires associés (6), souples, résistants en traction et non élastiques, de solidarisation mécanique temporaire dudit revêtement (5) porté par ledit support (1) audit élément (10, 11, 15) sur lequel ledit support est monté avec ledit revêtement expansé sur lui.

3. Ensemble selon la revendication 2, **caractérisé en ce que** lesdits moyens auxiliaires de solidarisation (6) sont des bandes, ayant une première portion terminale bloquée en translation par rapport au revêtement expansé sur ledit support et une deuxième portion terminale saillante au-delà de la deuxième extrémité dudit support, pour la fixation desdites bandes audit élément.

4. Ensemble selon la revendication 2, **caractérisé en ce que** lesdits moyens auxiliaires de solidarisation sont constitués par un manchon ayant une première portion terminale fixée au revêtement et sa deuxième portion terminale saillante au-delà de la première extrémité dudit support pour sa fixation audit élément.

5. Ensemble selon l'une des revendications 2 et 3, **caractérisé en ce que** lesdits moyens auxiliaires de solidarisation sont montés extérieurement sur ledit revêtement expansé et s'étendent sur au moins une partie de sa longueur.

6. Ensemble selon l'une des revendications 2 et 3, **caractérisé en ce que** lesdits moyens auxiliaires de solidarisation (6) sont montés intérieurement entre ledit revêtement expansé et ledit support, pour leur fixation directe au revêtement expansé sur ledit support.

7. Ensemble selon l'une des revendications 2 à 5, **caractérisé en ce qu'**il comporte des moyens de couplage mécanique (9), d'une part équipés pour recevoir et bloquer la première portion terminale desdits moyens auxiliaires de solidarisation (6) et d'autre part bloqués en translation le long dudit manchon expansé, tout au moins en direction de ladite deuxième extrémité dudit support (1).

8. Ensemble selon la revendication 7, **caractérisé en ce que** lesdits moyens de couplage (9) sont constitués par une bague, coulissante sur ledit support du côté de la première extrémité de celui-ci et bloquée en translation vers la deuxième extrémité dudit support par butée contre ledit revêtement expansé.

9. Ensemble selon la revendication 7, **caractérisé en ce que** lesdits moyens de couplage (9) sont saillants sur la périphérique dudit revêtement expansé.

10. Ensemble selon l'une des revendications 3 à 8, en ce que lesdits moyens auxiliaires de solidarisation (6) présentent une série de trous (8) le long de leur deuxième portion terminale, d'indexation de la position du manchon expansé par rapport à chacun desdits trous.

## Patentansprüche

1. Verfahren zum Aufbringen einer elastischen, röhrenförmigen Umhüllung auf ein Element durch Klemmwirkung, wobei ein steifer, röhrenförmigen Träger (1) verwendet wird, auf welchem die Umhüllung (5) vorher ausgebreitet wird, die von dem Träger getragene ausgebreitete Umhüllung um das genannte Element positioniert wird, und der Träger (1) wenigstens teilweise von der Unterseite der ausgebreiteten Umhüllung (5) durch Ziehen auf dem Träger (1) von einem ersten ihrer Enden (1A) gelöst wird, der Träger (1) vorbestimmte Abmessungen für seine freie Montage auf das Element aufweist, **dadurch gekennzeichnet, dass** eine vorübergehende materielle Befestigung zwischen der auf dem Träger (1) ausgebreiteten und auf dem Element positionierten Umhüllung und einem Bereich des Elementes, der jenseits des zweiten Endes (1B) liegt, das dem ersten (1A) des Trägers (1) gegenüberliegt, gewährleist ist, bevor der Träger (1) von der Unterseite der Umhüllung (5) gelöst wird um die Position der Umhüllung (5) beim Lösen des Trägers (1) beizubehalten.

2. Vorrichtung zum Aufbringen einer elastischen, röhrenförmigen Umhüllung auf ein Element mit Klemmwirkung, die einen starren, röhrenförmigen Träger (1) mit vorbestimmten Abmessungen für seine freie Montage auf ein Element und die auf dem Träger ausgebreitet montierte Umhüllung (5) zu ihrem Aufbringen auf das Element an ihrem Ort durch wenigstens teilweises Lösen des Trägers von der Unterseite der Umhüllung, durch Ziehen auf den Träger von einem ersten ihrer Enden, umfasst, **dadurch gekennzeichnet, dass** sie außerdem zusätzliche, assoziierte, nachgiebige, zugbeständige und nichtelastische Mittel (6) zur zeitweiligen mechanischen Befestigung der von dem Träger (1) getragenen Umhüllung (5) am Element (10, 11, 15), auf dem der Träger mit der auf ihm ausgebreiteten Umhüllung montiert ist, aufweist.

3. Vorrichtung nach Anspruch 2, **dadurch gekennzeichnet, dass** die zusätzlichen Mittel zur Befestigung (6) Streifen sind, mit einem bezüglich der auf dem Träger ausgebreiteten Umhüllung drehfesten ersten Endabschnitt und einem zweiten Endabschnitt der zur Befestigung der Streifen am Element über das zweite Ende des Trägers steht.

4. Vorrichtung nach Anspruch 2, **dadurch gekennzeichnet, dass** die zusätzlichen Mittel zur Befestigung eine Muffe ist, die einen an der Umhüllung befestigten ersten Endabschnitt und einen zweiten Endabschnitt aufweist, der zu ihrer Befestigung über das erste Ende des Trägers am Element ragt.

5. Vorrichtung nach einem der Ansprüche 2 und 3, **dadurch gekennzeichnet, dass** die zusätzlichen Mittel zur Befestigung auf der ausgebreiteten Umhüllung außen montiert sind und sich über wenigstens einen Teil ihrer Länge erstrecken.

6. Vorrichtung nach einem der Ansprüche 2 und 3, **dadurch gekennzeichnet, dass** die zusätzlichen Mittel zur Befestigung (6) für ihre direkte Befestigung an der ausgebreiteten Umhüllung auf dem Träger zwischen der ausgebreiteten Umhüllung und dem Träger innen angebracht sind.

7. Vorrichtung nach einem der Ansprüche 2 bis 5, **dadurch gekennzeichnet, dass** sie Mittel zur mechanischen Kopplung (9) aufweist, die einerseits ausgerüstet sind um den ersten Endabschnitt der zusätzlichen Mittel zur Befestigung (6) aufzunehmen und zu sperren, und andererseits in der Drehung entlang der ausgebreiteten Muffe, wenigstens in Richtung des zweiten Endes des Trägers (1), gesperrt sind.

8. Vorrichtung nach Anspruch 7, **dadurch gekennzeichnet, dass** die Mittel zur mechanischen Kopplung (9) durch einen Ring gebildet sind, der auf dem Träger auf der Seite dessen ersten Endes verschiebbar und in der Drehung zum zweiten Ende des Trägers durch Anschlag gegen die ausgebreitete Umhüllung gesperrt ist.

9. Vorrichtung nach Anspruch 7, **dadurch gekennzeichnet, dass** die Mittel zur mechanischen Kopplung (9) über den Rand der ausgebreiteten Umhüllung stehen.

10. Vorrichtung nach einem der Ansprüche 3 bis 8, **dadurch gekennzeichnet, dass** die zusätzlichen Mittel zur Befestigung (6) eine Reihe von Löchern längs des zweiten Endabschnitts zum Anzeigen der Position der ausgebreiteten Muffe in Bezug auf jedes Loch aufweisen.

## Claims

1. A method of tightly laying an elastic tubular covering on an element, the method consisting in using a rigid tubular support (1) on which said covering (5) is initially expanded, in positioning the expanded covering (5) carried by said support (1) around said element, and in taking away said support (1) at least in part from beneath said expanded covering (5), by pulling on said support (1) from a first end (1A) thereof, said support (1) being of dimensions designed to allow it to be mounted freely on said element, the method being **characterized in that** it consists in providing temporary physical connection between said expanded covering (5) on said support (1) thus positioned on said element and a zone of the element situated beyond the second end (1B) opposite from the first end (1A) of said support (1), prior to taking the support (1) away from beneath the covering (5) and serving to hold said covering (5) in position while the support (1) is being taken away.

2. An assembly for laying tightly a resilient tubular covering on an element, the assembly comprising a rigid tubular support (1) of dimensions designed to enable it to be mounted freely on the element, and the covering (5) being mounted in expanded form on said support for the purpose of being laid on the element by taking said support away, at least in part from beneath said covering by pulling on the support from a first one of its ends, the assembly being **characterized in that** it further includes associated auxiliary means (6) that are flexible, strong in traction, and not stretchable for temporarily mechanically securing said covering (5) carried by said support (1) to said element (10, 11, 15) on which said support is mounted with said covering expanded thereon.

3. An assembly according to claim 2, **characterized in that** said auxiliary securing means (6) are strips each having a first terminal portion prevented from moving in translation relative to the covering expanded on said support and a second terminal portion projecting beyond the second end of said support for enabling said strips to be fixed to said element.

4. An assembly according to claim 2, **characterized in that** said auxiliary securing means are constituted by a sleeve having a first terminal portion fixed to the covering and having its second terminal portion projecting beyond the first end of said support for fixing to said element.

5. An assembly according to claim 2 or 3, **characterized in that** said auxiliary securing means are mounted outside said expanded covering and extend over at least a portion of the length thereof.

6. An assembly according to claim 2 or 3, **characterized in that** said auxiliary securing means (6) are mounted internally, between said expanded covering and said support, for fixing directly to the expanded covering on said support.

7. An assembly according to any one of claims 2 to 5, **characterized in that** it includes mechanical coupling means (9), firstly fitted to receive and lock the first terminal portion of said auxiliary securing means (6), and secondly prevented from moving in translation along said expanded sleeve, at least towards said second end of said support (1).

8. An assembly according to claim 7, **characterized in that** said coupling means (9) are constituted by a ring, slidable on said support adjacent to the first end thereof and prevented from moving in translation towards the second end of said support by coming into abutment against said expanded covering.

9. An assembly according to claim 7, **characterized in that** said coupling means (9) project from the periphery of said expanded covering.

10. An assembly according to any one of claims 3 to 8, in which said auxiliary securing means (6) have a series of holes (8) along the second terminal portions thereof for indexing the position of the expanded sleeve relative to each of said holes.
